(19) Europäisches Patentamt
European Patent Office
Office européen des brevets

(11) Veröffentlichungsnummer: **0 015 484 B1**

(12) # EUROPÄISCHE PATENTSCHRIFT

(45) Veröffentlichungstag der Patentschrift: **09.11.83**

(21) Anmeldenummer: **80100947.3**

(22) Anmeldetag: **26.02.80**

(51) Int. Cl.³: **C 08 F 222/20**, C 08 F 212/02, C 09 D 3/727, C 09 J 3/14, C 08 G 18/62 // (C08F212/02, 222/20)

(54) **Verfahren zur Herstellung von Copolymeren und deren Verwendung.**

(30) Priorität: **01.03.79 DE 2907997**

(43) Veröffentlichungstag der Anmeldung: **17.09.80 Patentblatt 80/19**

(45) Bekanntmachung des Hinweises auf die Patenterteilung: **09.11.83 Patentblatt 83/45**

(84) Benannte Vertragsstaaten: **AT BE CH FR GB IT NL SE**

(56) Entgegenhaltungen:
**DE - A - 1 593 278**
**DE - A - 2 410 512**
**DE - A - 2 460 329**
**FR - A - 2 292 695**
**GB - A - 1 182 225**

(73) Patentinhaber: **HOECHST AKTIENGESELLSCHAFT, Postfach 80 03 20, D-6230 Frankfurt am Main 80 (DE)**

(72) Erfinder: **Ritz, Jürgen Dr., Am Hipperich 68, D-6500 Mainz (DE)**
Erfinder: **Hotze, Hermann, Am Weinberg 20, D-6200 Wiesbaden (DE)**
Erfinder: **Mummenthey, Hans-Dieter, Kapellenstrasse 71, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 015 484 B1

Verfahren zur Herstellung von Copolymeren und deren Verwendung

Die Herstellung von wärmehärtbaren Bindemitteln durch radikalische Copolymerisation von Styrolen, Alkyl- und Hydroxyalkylestern der Acryl- und/oder Methacrylsäure sowie Maleinsäurehalbestern mit $C_{4-8}$-Alkoholen oder den Umsetzungsprodukten dieser Halbester mit einer Monoglycidylverbindung ist aus der DE-A-2 460 329 bekannt. Als Maleinsäurehalbester sind hierbei nur solche von Isobutyl- oder Äthylhexylalkohol, also einwertigen Alkoholen genannt. Infolgedessen weisen diese Halbester keine freien OH-Gruppen auf. Die so hergestellten Produkte lassen sich durch Zusatz von Polyisocyanaten oder Aminharzen bei erhöhter Temperatur härten. Diese Bindemittel finden Verwendung zur Herstellung von Überzügen, Beschichtungen oder dergleichen.

Die DE-A-2 410 512 beschreibt die Umsetzung einer ungesättigten Dicarbonsäure, z. B. Maleinsäure, mit einem mehrwertigen Alkohol, z. B. einem Diol oder Triol, und in zweiter Stufe die weitere Umsetzung des Zwischenprodukts mit einer Epoxydverbindung in Form eines Glycidylesters, Glycidyläthers oder Alkylenoxyd. Die in zweiter Stufe erhaltenen niedermolekularen Verbindungen lassen sich nach Vermischen mit einem Aminharz bei erhöhter Temperatur, z. B. 30 Minuten bei 120 bis 180° C, härten und auf diese Weise zu Überzügen verarbeiten.

Eine Vernetzung der bekannten Produkte bei Raumtemperatur ist im Fall der erstgenannten Druckschrift wegen ihres zu geringen Anteils an reaktiven Gruppen und im Fall der zweitgenannten Druckschrift wegen des zu niedrigen Molekulargewichtes der zu härtenden Produkte nicht möglich. Beide Veröffentlichungen sehen also nur eine Wärmehärtung vor. Aus diesem Grund ist der Anwendungsbereich der bekannten Bindemittel beschränkt. Es war daher erwünscht, den Anwendungsbereich von derartigen Bindemitteln für Überzüge zu erweitern.

Die Erfindung betrifft nun ein Verfahren zur Herstellung von Copolymeren durch Copolymerisation von olefinisch ungesättigten, OH-Gruppen enthaltenden Mischestern mit ungesättigten Monomeren, die keine freie COOH-Gruppe enthalten, dadurch gekennzeichnet, daß in erster Stufe ein Anhydrid einer olefinisch ungesättigten Dicarbonsäure mit einem mehrwertigen Alkohol unter Bildung eines Halbesters mit freien OH-Gruppen umgesetzt wird, daß in einer zweiten Stufe der Halbester mit einer Monoepoxydverbindung in Form von Glycid, eines Glycidyläthers von Phenolen oder Glycidylesters von gesättigten Carbonsäuren zu einem Mischester umgesetzt wird, daß der Mischester darauf mit den ungesättigten Monomeren copolymerisiert wird und daß das so erhaltene, bei Raumtemperatur härtbare Reaktionsprodukt in Form des Copolymerisats isoliert oder unter Einwirkung eines Härtungsmittels gehärtet wird.

Durch die Erfindung wird die Möglichkeit geschaffen, die Produkte wahlweise bei Raumtemperatur oder erhöhter Temperatur zu härten und dabei Filme und Überzüge mit einwandfreien physikalischen und chemischen Eigenschaften zu erhalten. Damit wird die Anwendungsmöglichkeit dieser Copolymeren bei ihrer Verwendung als Bindemittel wesentlich erweitert.

Die Herstellung des Halbesters in erster Stufe wird auf übliche Weise durchgeführt. Die Umsetzung des Halbesters in zweiter Stufe erfolgt zweckmäßig bei 100 bis 170, vorzugsweise 120 bis 155° C und im allgemeinen mit äquivalenten Mengen der Monoepoxydverbindung, weil dadurch die Reaktion besonders glatt verläuft, wobei die Epoxydgruppen aufgespalten werden unter Bildung einer Estergruppe — und gegebenenfalls in geringem Umfang einer Äthergruppe — mit freien OH-Gruppen. Auf diese Weise erhält man einen Mischester der ursprünglich eingesetzten Dicarbonsäure, dessen eine Estergruppe freie OH-Gruppen von der mehrwertigen Alkoholkomponente und dessen andere Estergruppe freie OH-Gruppen von der Epoxydkomponente aufweist. Diese freien OH-Gruppen spielen für die spätere Härtung des Copolymeren eine wesentliche Rolle.

Je nach den gewünschten Eigenschaften der Zwischenprodukte läßt sich das Molekulargewicht und damit die Viskosität der Endprodukte steuern. So ist es möglich, durch ein geeignetes Äquivalentverhältnis von den OH-Gruppen des Ausgangsalkohols zu den COOH-Gruppen der Ausgangssäure monomere oder auch oligomere polymerisierbare Zwischenprodukte zu erzielen. Gewöhnlich liegt das Molekulargewicht der copolymerisierbaren Zwischenprodukte im Bereich von 250 bis 1500, vorzugsweise 400 bis 1250. Die OH-Zahl dieser Zwischenprodukte liegt gewöhnlich im Bereich von 175 bis 550, vorzugsweise zwischen 280 und 450.

Die Copolymerisation der Zwischenprodukte läßt sich in einer oder mehreren, vorzugsweise in zwei Stufen durchführen, und zwar im allgemeinen bei 80 bis 220, vorzugsweise 130 bis 170, insbesondere 140 bis 160° C, wobei gegebenenfalls auf die Mitverwendung von Lösungsmitteln verzichtet werden kann. Die Copolymerisation kann thermisch erfolgen. Vorzugsweise arbeitet man jedoch in Gegenwart von Katalysatoren, insbesondere radikalischen Katalysatoren, vor allem Peroxyden, z. B. Di-tert.-butylperoxyd, Di-benzoylperoxyd, Di-cumylhydroperoxyd oder Azoverbindungen, wie Azo-bis-isobutyronitril oder dergleichen. Dabei ist die Gegenwart von Lösungs- oder Verdünnungsmitteln, die vorgelegt werden können, zweckmäßig. Geeignete Lösungsmittel sind z. B. hochsiedende aliphatische und/oder aromatische Lösungsmittel mit einem Siedepunkt von 140 bis 185° C, wie Mineralöl mit einem Siedepunkt von 160 bis 180° C, Xylole, Äthylenglykolacetatmonoäthyläther oder -butyläther oder dergleichen. Gegebenenfalls kann die Copolymerisation zur Steuerung des Molekulargewichts auch in Gegenwart von Kettenabbrechern, z. B. Alkanthiolen wie n-Dodecylmercaptan durchgeführt werden.

Die copolymerisierbaren Monomeren können jeweils einzeln oder im Gemisch vorliegen. Falls ein Monomerengemisch mit dem Zwischenprodukt copolymerisiert wird, kann man ein solches Monomerengemisch einsetzen, in dem höchstens 20, vorzugsweise höchstens 10 Gew.-%, bezogen auf das gesamte Monomerengemisch, Hydroxyalkylester vorliegen.

Die Copolymerisation wird man zweckmäßig so lange durchführen, bis der gewünschte Festkörpergehalt des Copolymerisats von mindestens 60 Gew.-%, und je nach eingesetzter Lösungsmittelmenge im allgemeinen nicht über 80, vorzugsweise nicht über 70 Gew.-% erreicht ist.

Geeignete copolymerisierbare Monomere sind beispielsweise aromatische Vinylverbindungen, wie Styrol, α-Methylstyrol, die verschiedenen Vinyltoluole und Divinylbenzole — die zuletzt genannten jedoch im allgemeinen nur in untergeordneten Mengen —, Acrylsäure- bzw. Methacrylsäurealkylester mit 1 bis 6, vorzugsweise 1 bis 4 C-Atomen im Alkylrest bzw. die entsprechenden Hydroxyalkylester, wie Methyl-, Äthyl-, n- oder iso-Propyl-, n-, sec-, iso- oder tert.-Butyl-, die verschiedenen Pentyl- und Hexylacrylate bzw. -methacrylate jeweils einzeln oder im Gemisch, Hydroxyester mit 2 bis 4 C-Atomen, wie Hydroxyäthyl- und Hydroxypropylacrylat bzw. -methacrylat, ebenfalls jeweils einzeln oder im Gemisch. Falls die Copolymerisation mit einem Monomerengemisch durchgeführt wird, enthält dieses Gemisch zweckmäßig mindestens 50 Mol-% aromatische Vinylverbindungen, vorzugsweise Styrol.

Als Dicarbonsäureanhydrid zur Herstellung der Halbester ist z. B. Itaconsäureanhydrid geeignet, vorzugsweise jedoch Maleinsäure- und Citraconsäureanhydrid, jeweils einzeln oder im Gemisch.

Geeignete mehrwertige Alkohole sind beispielsweise Diole, wie Äthylenglykol, Propandiol-1,2, Propandiol-1,3, die verschiedenen Butan-, Pentan- und Hexandiole, wie Butandiol-1,4, Hexandiol-1,6, Neopentylglykol, Diäthylenglykol, Dipropylenglykol, Triole, wie Glycerin, Trimethylol-äthan und -propan, Pentaerythrit, Dipentaerythrit. Weiterhin können auch Umsetzungsprodukte dieser Polyole mit Isocyanatverbindungen oder Carbonsäuren, z. B. Pentaerythrit-mono- oder -Diester mit Monocarbonsäuren, eingesetzt werden, solange sie mindestens zwei freie OH-Gruppen pro Molekül enthalten.

Als Reaktionspartner für die Umsetzung in zweiter Stufe eignen sich Glycid, Glycidyläther von Phenolen, wie des Phenols, der Kresole oder des tert. Butylphenols, Glycidylester von gesättigten Carbonsäuren; vorzugsweise jedoch Glycidylester verzweigter Fettsäuren mit der allgemeinen Formel

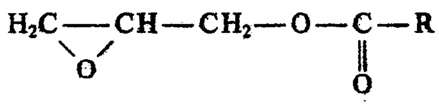

worin R der Rest einer in α-Stellung verzweigten Fettsäure mit 8 bis 16, vorzugsweise 10 bis 12 C-Atomen ist.

Im Rahmen der Erfindung liegt auch die Härtung des in dritter oder einer weiteren Stufe erhaltenen Copolymerisats, wobei die Härtung in Gegenwart von verkappten oder freien Polyisocyanaten, Polycarbonsäuren, vorzugsweise in Form von Anhydriden, Aminharzen oder Phenolharzen als Härtungsmitteln erfolgen kann. Als Polyisocyanate seien z. B. genannt zwei- bis vierwertige Isocyanate, wie Toluylendiisocyanat, Isophorondiisocyanat, Hexamethylendiisocyanat, 2,4,6-Triisocyanato-toluol, 4,4′,4″-Triisocyanato-triphenylmethan, 2,4,4′-Triisocyanato-diphenylmethan, 2,2′,5,5′-Tetraisocyanatodiphenylmethan, ferner dreiwertige Isocyanate, die beispielsweise durch Addition von Trimethylolpropan an Toluylen-diisocyanat zugänglich sind, ein durch Umsetzung von Hexamethylendiisocyanat und Wasser herstellbares Triisocyanat oder Isocyanate mit bis zu vier freien Isocyanatgruppen, wie sie z. B. durch Umsetzung von Toluylen-diisocyanat und Hexamethylen-diisocyanat herstellbar sind, bzw. deren Verkappungsprodukte mit z. B. Acetessigsäureestern, z. B. des Methanols, Äthanols, der Propanole bzw. Butanole oder ε-Caprolactam. Als Polycarbonsäuren kommen z. B. in Frage Maleinsäure, Bernsteinsäure, Adipinsäure, Phthalsäure, Trimellithsäure, Pyromellithsäure oder Anhydride dieser Säuren, ferner niedermolekulare oligomere Ester oder Polyester mit freien COOH-Gruppen. Gegebenenfalls kann auch zusätzlich ein Katalysator zugegen sein, vorzugsweise organische Metallverbindungen, wie Dibutyl-zinndilaurat, Dibutylzinnoxyd, Kobaltnaphthenat oder -octoat, oder Amine, wie Äthylendiamin und dessen Homologe, wie Diäthylentriamin, Tetraäthylenpentamin, tertiäre Amine, wie Triäthylamin, Tributylamin, Dimethylanilin, vorzugsweise jedoch Alkanolamine, wie Diäthyläthanolamin.

Überraschenderweise werden nach dem erfindungsgemäßen Verfahren Produkte erhalten, die zumindest ebenso gute Eigenschaften aufweisen wie handelsübliche Produkte, die unter Verwendung von über 20 Gew.-% Hydroxylalkylacrylaten hergestellt wurden.

Die Härtung, insbesondere mit Polyisocyanaten kann bereits bei Raumtemperatur erfolgen. Bei erhöhter Temperatur lassen sich vorwiegend die anderen der obengenannten Härter einschließlich verkappten Isocyanaten einsetzen, wobei die Amin- und Phenolharze z. B. auch in Gegenwart von Säuren, wie Toluolsulfonsäure als Härter wirken können. Im allgemeinen verläuft die Wärmehärtung innerhalb von 10 bis 30 Minuten bei 120 bis 200° C. Gerade bei der Verwendung von Isocyanaten kann der Zusatz von Katalysatoren, z. B. Metallverbindungen, wie Dibutylzinndilaurat und/oder Aminen, wie tertiäres Alkanolamin, z. B. Diäthyläthanolamin, von Interesse sein.

Das härtbare Bindemittel kann außerdem mit üblichen Pigmenten, Füll- und/oder Zusatzstoffen

kombiniert werden.

Auch wenn die erfindungsgemäß erhaltenen Produkte nur einen untergeordneten oder überhaupt keinen Anteil an Hydroxyalkylestern ungesättigter Säuren aufweisen, erhält man nach ihrer Härtung mit den geeigneten Härtern gehärtete Überzüge, die den bisher bekannten Überzügen auf der Basis von Acrylatharzen, die Hydroxyalkylester enthalten, zumindest gleichwertig sind, im allgemeinen jedoch überraschenderweise bessere lacktechnische Eigenschaften aufweisen. Durch die größere Variationsmöglichkeit und Auswahl an Reaktionspartnern bei der Herstellung der Copolymeren ermöglicht die vorliegende Erfindung die Auswahl optimaler Systeme für den jeweils gewünschten Zweck.

Außerdem wird die Löslichkeit der Polymeren durch den Einbau der Gruppen von ungesättigten Dicarbonsäuren, wie Maleinsäureester, in den Acrylate enthaltenden Systemen verbessert. Dadurch lassen sich Lösungsmittel enthaltende Systeme mit einem höheren Festkörpergehalt als mit den bisherigen Acrylatharzen, also umweltfreundlichere Systeme, herstellen.

Die erfindungsgemäß erhaltenen Produkte lassen sich für Anstrichmittel und/oder Überzüge für Aus- und Verkleidungen, beispielsweise auch als Korrosionsschutz für verschiedene Gegenstände, insbesondere solche, die atmosphärischen Einflüssen ausgesetzt sind, wie Bauwerke, Fahrzeuge und deren Teile, z. B. Karosserien, für Haushaltsgeräte und elektrotechnische Einrichtungen und deren Bauteile verwenden. Sie weisen eine gute Haftung auf Unterlagen aus Kunststoff und Metallen, wie Kupfer, Messing, Zink und Eisenlegierungen auf. Außerdem zeigen sie beim Auftragen als Überzüge einen guten Verlauf. Die gehärteten Überzüge zeichnen sich durch hohen Glanz, gute Elastizität, sehr gute Wetterbeständigkeit und Farbstabilität aus. Die bei Raumtemperatur härtbaren erfindungsgemäß erhaltenen Produkte eignen sich besonders zum Beschichten von Baustoffen, vorzugsweise Fußböden, z. B. solchen auf Basis von Zement und Beton. Ferner eignen sich die erfindungsgemäß erhaltenen Produkte zur Verwendung für Klebstoffe, wobei sich ihre gute Löslichkeit und ein dadurch bedingter erhöhter Festkörpergehalt vorteilhaft bemerkbar machen.

In den nachstehenden Beispielen bedeutet jeweils % = Gew.-% und T = Gew.-Teile.

## Beispiele

### I A. Herstellung eines Mischesters

In einem Reaktionsgefäß werden 134 T Trimethylolpropan, 98 T Maleinsäureanhydrid und 240 T Glycidylester einer verzweigten Fettsäure mit 10 C-Atomen unter stetigem Rühren und unter Schutzgas auf 100° C erwärmt. Die Temperatur wird eine Stunde beibehalten. Anschließend erwärmt man das Gemisch bis 150° C und hält diese Temperatur, bis die Säurezahl der Reaktionsschmelze $<15$ ist. Danach wird abgekühlt.

Das Reaktionsprodukt stellt einen Maleinsäuremischester dar. Es ist unverdünnt zähflüssig. Lösungsviskosität 200—300 mPa · s (70% Äthylenglykolmonoäthylätheracetat), OH-Zahl 350—360, Festkörpergehalt (unverdünnt) 97,5—98% (1 h/125° C).

### II. Copolymerisation

Nach den Beispielen B bis D polymerisiert man den Mischpolyester IA mit einem Monomeren-Gemisch. Nach dem Vergleichsbeispiel E, das eine dem Stand der Technik entsprechende Rezeptur darstellt, werden die einzelnen Komponenten direkt copolymerisiert. Die Monomeren und das Mengenverhältnis der Reaktionspartner sind aus Tabelle 1 ersichtlich.

Gemäß Beispielen B bis D wird zweistufig polymerisiert, beim Vergleichsbeispiel E nur in einer Stufe. Die Copolymerisation erfolgt in der Regel unter Schutzgas. Das Verhältnis der Reaktionskomponenten in der ersten und zweiten Verfahrensstufe sowie die Kennzahlen der Copolymeren (jeweils bezogen auf 100% Festkörper) ergeben sich ebenfalls aus Tabelle 1.

Tabelle 1

| | Vergleich | | | |
|---|---|---|---|---|
| | B | C | D | E |
| Xylol | 400 | 400 | 400 | 400 |
| Äthylenglykolmonoäthylätheracetat | 200 | 200 | 200 | 200 |
| Styrol | 337 | 326 | 326 | 252 |
| Methylmethacrylat | 206 | 197 | 188 | 188 |
| Acrylsäure | – | – | – | 74 |
| Glycidylester der verzweigten Fettsäure | – | – | – | 240 |
| Hydroxyäthylmethacrylat | 84 | 42 | – | 176 |
| Maleinsäuremischester IA | 311 | 362 | 413 | – |
| Di-tert.-butylperoxyd | 9 | 9 | 9 | 9 |
| n-Dodecylmercaptan | 10 | 10 | 10 | 10 |
| jedoch aufgeteilt auf zwei Stufen wie folgt: | | | | |
| 1. Stufe Mischung 1 | | | | |
| Maleinsäuremischester IA | 311 | 362 | 413 | – |
| Styrol | 250 | 250 | 250 | – |
| Di-tert.-butylperoxyd | 4,5 | 4,5 | 4,5 | – |
| n-Dodecylmercaptan | 5 | 5 | 5 | – |
| 2. Stufe Mischung 2 | | | | |
| Methylmethacrylat | 206 | 197 | 188 | – |
| Hydroxyäthylmethacrylat | 84 | 42 | – | – |
| Styrol | 87 | 76 | 76 | – |
| Di-tert.-butylperoxyd | 4,5 | 4,5 | 4,5 | – |
| n-Dodecylmercaptan | 5 | 5 | 5 | – |
| Kennzahlen der Copolymeren | | | | |
| Säurezahl | 5 | 7,5 | 7 | 10–12 |
| OH-Zahl | 153 | 165 | 154 | 150–155 |
| Viskosität (50 % in Äthylenglykolmonoäthylätheracetat) | 556 | 410 | 395 | 600–700 |
| Farbzahl | 2 | 2 | 2 | 1–2 |

## Beispiele B bis D

In einem mit Rückflußkühler ausgerüsteten Reaktionsgefäß werden nach gründlichem Spülen mit Stickstoff 400 T Xylol und 200 T Äthylenglykolmonoäthylätheracetat auf Rückflußtemperatur (ca. 150° C) erwärmt. Bei dieser Temperatur wird die Mischung 1 (siehe Tabelle 1) so zugetropft, daß die Rückflußtemperatur der Reaktionslösung nicht unter 140° C absinkt und die Zugabe der Monomeren in ca. 3½ Stunden beendet ist. Unmittelbar daran anschließend wird die Mischung 2 mit den restlichen Monomeren bei der Rückflußtemperatur von 140–145° C wie in Stufe 1 im Laufe von 3 Stunden zugetropft. Man läßt noch 2 Stunden bei Rückflußtemperatur nachreagieren.

## Vergleich E

In einem mit Rückflußkühler ausgerüsteten Reaktionsgefäß werden nach vorherigem Spülen der Apparatur mit Stickstoff das Lösungsmittelgemisch und der Glycidylester einer verzweigten Fettsäure bis auf die Reaktionstemperatur von 145° C erwärmt. Darauf wird unter ständigem Rühren das Monomerengemisch mit dem Initiator und dem Kettenregler in solcher Geschwindigkeit zugetropft, daß die Temperatur der Reaktionslösung im Reaktionsgefäß 138 bis 140° C nicht unterschreitet. Im allgemeinen ist die Monomeren-Zugabe nach 6 bis 7 Stunden beendet. Anschließend wird noch ca. 2 Stunden bei Temperaturen von 140 bis 145° C nachpolymerisiert, bis der Festkörpergehalt der Polymerenlösung 60,5 bis 61,5% (20 min/160° C) anzeigt.

## III. Herstellung von Überzugsmitteln

Aus den Lösungen der Copolymeren werden Überzugsmittel folgender Zusammensetzung angefertigt:

| | |
|---|---|
| Copolymeren-Lösung | 45 T |
| Dibutylzinndilaurat (1%ig in Xylol) | 0,15 T |
| Diäthyläthanolamin | 0,25 T |
| Siliconöl (1%ig in Xylol) | 1 T |
| alkylaromatisches Mineralöl (Siedebereich 160–165° C) | 5,6 T |
| Xylol | 6,5 T |
| Äthylenglykolmonoäthylätheracetat | 9 T |
| Polyisocyanat (75%ig) (aus 3 Mol Hexamethylendiisocyanat + 1 Mol $H_2O$) | 18 T |

Die Isocyanat-Komponente wird kurz vor dem Auftragen auf die Unterlage der Copolymeren-Lösung unter Rühren zugegeben. Dann wird die Lösung mit einem Gemisch von Butylacetat/Äthylenglykolmonoäthylätheracetat (Volumenverhältnis 1 : 1) auf eine Auslaufzeit von 45 s (DIN 53 211/20° C) eingestellt, in einer Naß-Schichtdicke von 100 µm auf Glasplatten und phosphatierte Stahlbleche aufgebracht. Der Überzug wird bei Raumtemperatur an der Luft getrocknet.

## IV. Lacktechnische Prüfung

Die Ergebnisse der lacktechnischen Prüfung sind aus Tabelle 2 ersichtlich.

Tabelle 2

| | Vergleich | | | |
|---|---|---|---|---|
| | B | C | D | E |
| *) Staubtrocknung (min) | 21 | 24 | 28 | 30 |
| Pendelhärte (s) nach 24 h | 52 | 55 | 53 | 47 |
| Erichsentiefung nach 10 Tagen | >9,0 | >9,2 | >9,2 | 8,1 |
| Benzinbeständigkeit/min (nach 10 Tagen) | >30 | >30 | >30 | >30 |
| Festkörpergehalt (%) (1 h/125°C) | 53 | 52,5 | 51 | 49,4 |
| Viskositätsanstieg (%) gebrauchsfertige Lösung nach 7 h/25°C | 104 | 97 | 102 | 127 |

*) Der Begriff Staubtrocknung bezieht sich auf die Zeit, nach der der Überzug so trocken ist, daß kein Staub mehr daran hängen bleibt.

V. Diskussion der Ergebnisse

Wie sich aus Tabelle 2 ergibt, ist die Staubtrocknung der Proben B bis D gegenüber der Vergleichsprobe E verbessert. Infolge der raschen Durchtrocknung und Durchhärtung ergibt sich für die Proben B bis D auch eine erhöhte Pendelhärte und eine verbesserte Erichsentiefung. Die Proben B bis D zeigen überraschenderweise einen erhöhten Festkörpergehalt bei gleich eingestellter Auslaufzeit. Dies deutet auf eine erhöhte Löslichkeit in den verwendeten Lösungsmitteln bzw. eine niedrigere Viskosität der Produkte hin. Der praktische Vorteil dieser Eigenschaft liegt darin, daß mit den erfindungsgemäß hergestellten Produkten bei gleicher Viskosität wie der Vergleichsprobe Mischungen mit einem geringeren Lösungsmittelgehalt, also umweltfreundlichere Systeme, hergestellt werden können. Obwohl die Produkte B bis D eine relativ rasche Staubtrocknung aufweisen, ist es weiterhin überraschend, daß der Viskositätsanstieg der Proben B bis D gering ist und damit die Verarbeitungszeit im Vergleich zur Probe E verhältnismäßig günstig liegt.

**Patentansprüche**

1. Verfahren zur Herstellung von Copolymeren durch Copolymerisation von a) olefinisch ungesättigten, OH-Gruppen enthaltenden Mischestern mit b) ungesättigten Monomeren, die keine freie COOH-Gruppe enthalten, dadurch gekennzeichnet, daß in erster Stufe ein Anhydrid einer olefinisch ungesättigten Dicarbonsäure mit einem mehrwertigen Alkohol unter Bildung eines Halbesters mit freien OH-Gruppen umgesetzt wird, daß in einer zweiten Stufe der Halbester mit einer Monoepoxydverbindung in Form von Glycid, eines Glycidyläthers von Phenolen oder Glycidylesters von gesättigten Carbonsäuren zu einem Mischester umgesetzt wird, daß der Mischester darauf mit den ungesättigten Monomeren copolymerisiert wird und daß das so erhaltene, bei Raumtemperatur härtbare Reaktionsprodukt in Form des Copolymerisats isoliert oder unter Einwirkung eines Härtungsmittels gehärtet wird.

2. Verfahren nach Anspruch 1, dadurch gekennzeichnet, daß die Umsetzung des Halbesters in der zweiten Stufe bei 100—170, vorzugsweise 120—155°C und mit äquivalenten Mengen der Monoepoxydverbindung durchgeführt und ein Produkt hergestellt wird, dessen Molekulargewicht 250—1500, vorzugsweise 400—1250 beträgt und dessen OH-Zahl zwischen 175 und 550, vorzugsweise zwischen 280 und 450 liegt.

3. Verfahren nach Anspruch 1 oder 2, dadurch gekennzeichnet, daß die Copolymerisation mit einem solchen Monomerengemisch durchgeführt wird, das mindestens 50 Mol-% aromatische Vinylverbindungen, vorzugsweise Styrol, und höchstens 20 Gew.-%, vorzugsweise keine Hydroxyalkylester enthält.

4. Verfahren nach einem oder mehreren der Ansprüche 1 bis 3, dadurch gekennzeichnet, daß die Copolymerisation mindestens teilweise in Gegenwart eines radikalischen Katalysators, vorzugsweise eines Peroxyds, vorgenommen wird.

5. Verfahren nach einem oder mehrere Ansprüche 1 bis 4, dadurch gekennzeichnet, daß die Copolymerisation in zwei Stufen durchgeführt wird.

6. Verfahren nach einem oder mehreren der Ansprüche 1 bis 5, dadurch gekennzeichnet, daß die Copolymerisation bei 80 bis 220, vorzugsweise bei 130 bis 170 und insbesondere bei 140 bis 160°C durchgeführt wird.

7. Verfahren nach einem oder mehreren der Ansprüche 1 bis 6, dadurch gekennzeichnet, daß die Copolymerisation so lange durchgeführt wird, bis der Festkörpergehalt des Copolymerisats 60 bis 80, vorzugsweise bis 70 Gew.-% beträgt.

8. Verfahren nach einem oder mehreren der Ansprüche 1 bis 7, dadurch gekennzeichnet, daß das Copolymerisat durch Einwirkung einer Verbindung der Gruppe verkappte oder freie Polyisocyanate, Polycarbonsäuren, vorzugsweise in Form von deren Anhydriden, Aminharze und Phenolharze gehärtet wird.

9. Verfahren nach Anspruch 8, dadurch gekennzeichnet, daß die Härtung in Gegenwart eines Katalysators, vorzugsweise organischer Metallverbindungen und/oder Aminen durchgeführt wird.

10. Verwendung der nach dem Verfahren gemäß einem oder mehreren der Ansprüche 1 bis 9 hergestellten Produkte als Bindemittel für Lacke, Überzüge bzw. Klebstoffe.

## Claims

1. Process for the preparation of copolymers by copolymerisation of a) olefinically unsaturated co-esters containing OH-groups with b) unsaturated monomers containing no free carboxyl group, characterized in that there is reacted in a first stage an anhydride of an olefinically unsaturated dicarboxylic acid with a polyhydric alcohol to yield a semi-ester containing free OH-groups, that the semi-ester is reacted in a second stage with a monoepoxy compound in the form of glycidol, a glycidyl ether of phenols or a glycidyl ester of saturated carboxylic acids to yield a co-ester, that the co-ester is then copolymerised with the unsaturated monomers and that the reaction product thus obtained and hardenable at ambient temperature is isolated in the form of the copolymer or is hardened under the action of a hardening agent.

2. A process according to claim 1, characterized in that the reaction of the semi-ester in the second stage is effected at 100 to 170, preferably 120 to 155°C and with an equivalent quantity of the monoepoxide compound to yield a product having a molecular weight of from 250 to 1500, preferably 400 to 1250 and the OH-number of which is between 175 and 550, preferable between 280 and 450.

3. A process according to claim 1 or 2, characterized in that the copolymerisation is effected with such a monomer mixture which contains at least 50 mol.-% of aromatic vinyl compounds, preferably styrene, and at most 20% by weight, preferably no, hydroxyalkyl esters.

4. Process according to one or more of claims 1 to 3, characterized in that the copolymerisation is carried out at least partly in the presence of a free radical catalyst, preferably a peroxide.

5. Process according to one or more of claims 1 to 4, characterized in that the copolymerisation is carried out in two stages.

6. Process according to one or more of claims 1 to 5, characterized in that the copolymerisation is carried out at 80 to 220, preferably at 130 to 170 and particularly at 140 to 160°C.

7. Process according to one or more of claims 1 to 6, characterized in that the copolymerisation is carried out for a time until the solids content of the copolymer is 60 to 80, preferably to 70% by weight.

8. Process according to one or more of claims 1 to 7, characterized in that the copolymer is hardened by the action of compound of the group blocked or free polyisocyanates, polycarboxylic acids, preferably in the form of their anhydrides, amine resins and phenolic resins.

9. Process according to claim 8, characterized in that the hardening is carried out in the presence of a catalyst, preferably organo-metallic compounds and/or amines.

10. Use of the products produced according to the process of one or more of claims 1 to 9 as binders for paints, coatings or adhesives.

## Revendications

1. Procédé de préparation de copolymères par copolymérisation a) d'esters mixtes à insaturation oléfinique contenant des groupes OH avec b) des monomères insaturés ne contenant pas de groupe COOH libre, procédé caractérisé en ce que, dans une première étape, on fait réagir un anhydride d'un acide dicarboxylique à insaturation oléfinique avec un polyol avec formation d'un semiester contenant des groupes OH libres, dans une seconde étape on fait réagir le semiester ainsi produit avec un composé monoépoxydique sous la forme de glycidol, d'un éther glycidylique de phénol ou d'un ester glycidylique d'acide carboxylique saturé, réaction qui conduit à un ester mixte, puis on copolymérise l'ester mixte avec les monomères insaturés et on isole le produit réactionnel ainsi produit, durcissable à la température ambiante, sous la forme du copolymère ou on le durcit sous l'action d'un durcisseur.

2. Procédé selon la revendication 1, caractérisé en ce qu'on effectue la réaction du semiester dans la seconde étape à une température de 100 à 170, de préférence de 120 à 155°C, en mettant en jeu le composé monoépoxydique en des quantités équivalentes et on prépare un produit dont le poids

moléculaire se situe entre 250 et 1500, de préférence entre 400 et 1250, et dont l'indice d'hydroxyle se situe entre 175 et 550, de préférence entre 280 et 450.

3. Procédé selon l'une quelconque des revendications 1 ou 2, caractérisé en ce qu'on effectue la copolymérisation en mettant en jeu un mélange de monomères contenant au moins 50% en moles de composés vinyliques aromatiques, de préférence le styrène, et au plus 20% en poids d'esters hydroxyalkyliques, de préférence ne contenant pas d'esters hydroxyalkyliques.

4. Procédé selon une ou plusieurs des revendications 1 à 3, caractérisé en ce qu'on effectue la copolymérisation, au moins en partie, en présence d'un catalyseur formant des radicaux libres, de préférence en présence d'un peroxyde.

5. Procédé selon une ou plusieurs des revendications 1 à 4, caractérisé en ce qu'on effectue la copolymérisation en deux étapes.

6. Procédé selon une ou plusieurs des revendications 1 à 5, caractérisé en ce qu'on effectue la copolymérisation à une température de 80 à 220° C, de préférence de 130 à 170° C, en particulier de 140 à 160° C.

7. Procédé selon une ou plusieurs des revendications 1 à 6, caractérisé en ce qu'on effectue la copolymérisation jusqu'à ce que la teneur en matière solide du copolymère atteigne 60 à 80% en poids, de préférence au plus 70% en poids.

8. Procédé selon une ou plusieurs des revendications 1 à 7, caractérisé en ce qu'on durcit le copolymère par l'action d'un composé pris dans l'ensemble constitué par les polyisocyanates bloqués ou libres, les acides polycarboxyliques, de préférence sous la forme de leurs anhydrides, les résines d'amines et les résines phénoliques.

9. Procédé selon la revendication 8, caractérisé en ce qu'on effectue le durcissement en présence d'un catalyseur, de préférence de composés organométalliques et/ou d'amines.

10. Utilisation des produits préparés par le procédé selon une ou plusieurs des revendications 1 à 9, comme liants pour des vernis, des peintures, des revêtements ou des adhésifs.